# EUROPÄISCHE PATENTSCHRIFT

(11) **EP 1 834 817 B1**
(45) Veröffentlichungstag und Bekanntmachung des Hinweises auf die Patenterteilung: **16.06.2010**
(21) Anmeldenummer: 07004176.9
(22) Anmeldetag: 28.02.2007
(51) Int. Cl.: B60H 1/22

(54) **Verfahren zum Betreiben eines Fahrzeugheizgerätes im Verbrennungsbetrieb**
Method for operating a vehicle heater during combustion operation
Procédé de fonctionnement d'un appareil de véhicule automobile pendant la fonction de combustion

(30) Priorität: 16.03.2006 DE 102006012211
(43) Veröffentlichungstag der Anmeldung: 19.09.2007
(73) Patentinhaber: J. Eberspächer GmbH & Co. KG, 73730 Esslingen (DE)
(72) Erfinder: Pfister, Wolfgang, 73732 Esslingen (DE); Köberle, Christoph, 70736 Fellbach (DE); Epple, Jürgen, 72135 Dettenhausen (DE)
(74) Vertreter: Ruttensperger, Bernhard

(56) Entgegenhaltungen:
- DE-A1- 10 144 404
- DE-A1- 19 752 839
- DE-A1- 19 906 285
- DE-A1-102004 025 586

## Beschreibung

Die vorliegende Erfindung betrifft ein Verfahren, mit welchem ein Fahrzeugheizgerät bei Durchführung eines normalen Verbrennungsbetriebs betrieben werden kann. Ein derartiges Fahrzeugheizgerät, weißt im Allgemeinen einen Brennerbereich mit einer Brennkammer, eine Brennstoffzuführeinheit zum Zuführen von Brennstoff, im Allgemeinen flüssigen Brennstoff, zu dem Brennerbereich und ein Gebläse mit einem Elektroantriebsmotor auf, um zusammen mit dem zugeführten Brennstoff zu verbrennende Verbrennungsluft zu dem Brennerbereich zu fördern. Die Brennstoffzuführeinheit, beispielsweise eine Dosierpumpe, und der Elektroantriebsmotor stehen unter der Ansteuerung einer Ansteuervorrichtung, die in Abhängigkeit von verschiedenen für den Betrieb des Fahrzeugheizgerätes bedeutsamen Randbedingungen die Brennstoffzuführeinheit und den Elektroantriebsmotor ansteuert. Diese Randbedingungen können beispielsweise die Umgebungstemperatur, die Temperatur in einem Fahrzeuginnenraum und dergleichen umfassen, also Größen, die für den im Brennerbereich bzw. im Fahrzeugheizgerät vorzusehenden Verbrennungsbetrieb bzw. die bereitzustellende Heizleistung maßgebend sind.

Bei brennstoffbetriebenen Fahrzeugheizgeräten hängt die im Heizgerät bereitgestellte Heizleistung grundsätzlich von der Menge des eingespeisten Brennstoffs bzw. Kraftstoffs und der in Zuordnung dazu auch eingespeisten Verbrennungsluftmenge ab. Dabei beeinflusst das Verhältnis von Brennstoffzuführmenge und eingeleiteter Verbrennungsluftmenge nicht nur die Heizleistung, sondern vor allem auch den Schadstoffausstoß, beispielsweise die CO₂-Emission. Um die gewünschte Heizleistung bereitstellen zu können, wird im Allgemeinen so vorgegangen, dass bei vorgegebener und einer Heizleistung zugeordneter Brennstoffzuführmenge, die durch die Brennstoffzuführeinheit in Richtung Brennerbereich gespeist wird, im Gebläse eine gewünschte Fördermenge dadurch eingestellt wird, dass für den Elektroantriebsmotor und somit einen damit auch gekoppelten Rotor des Gebläses eine entsprechende Drehzahl vorgegeben wird. Um dabei die Verbrennungsbedingungen näherungsweise gleich bleibend halten zu können, findet im normalen Verbrennungsbetrieb, also nach Durchlauf der Startphase, im Allgemeinen eine Drehzahlregelung im Bereich des Elektroantriebsmotors statt, um sicherzustellen, dass bei genau dosierter Brennstoffzuführmenge die Verbrennungsbedingungen näherungsweise konstant gehalten werden können. Bewegt man sich nun mit einem mit einem Fahrzeugheizgerät ausgestatteten Fahrzeug in profiliertem Gelände, beispielsweise auf einer Passstraße, so hat dies zur Folge, dass in vergleichsweise kurzer Zeit das Fahrzeug und somit auch das Fahrzeugheizgerät in verschiedenen Höhenbereichen sein wird. Dies wiederum führt dazu, dass bei beispielsweise zunehmender Höhe und entsprechend abnehmender Luftdichte auf Grund der allgemein vorgesehenen Drehzahlregelung im Elektroantriebsmotor in Zuordnung zu der für den Verbrennungsbetrieb und die geforderte Heizleistung vorgegebenen Brennstoffzuführmenge eine geringere Menge an Luft und entsprechend eine geringere Menge an Sauerstoff in den Brennerbereich gefördert wird. Dies bedingt ein verändertes Verhältnis von Brennstoff zur Verbrennungsluft bzw. zu Sauerstoff mit der Folge, dass bei abnehmendem Sauerstoffanteil der CO₂-Gehalt in den Abgasen ansteigt.

Aus der DE 199 06 285 ist es bekannt, ein Fahrzeugheizgerät unter Berücksichtigung des Luftdrucks zu betreiben. Hierzu ist ein Luftdruckmesser vorgesehen, dessen Signale in einer Ansteuervorrichtung empfangen werden und dazu genutzt werden, den Betrieb des Fahrzeugheizgerätes, insbesondere die Brennstoffzuführmenge und die Gebläsedrehzahl, einzustellen.

Die DE 10 2004 025586 A1 offenbart ein Heizgerät bzw. ein Verfahren zum Betreiben desselben, bei welchem zum Durchführen einer Leistungsregelung eines Elektroantriebsmotors eines Verbrennungsluftgebläses eine Variation der pulsweitenmodulierten Betriebsspannung für den Elektroantriebsmotor durchgeführt wird.

Die DE 197 52 839 A1 offenbart ein Verfahren zum Steuern eines Heizgerätes, bei welchem überwacht wird, ob eine aktuelle Drehzahl eines Verbrennungsluftgebläses einer vorgegebenen Soll-Drehzahl entspricht oder davon abweicht. Liegt eine Abweichung vor, so wird beruhend auf der Größe der Abweichung der Betrieb einer Brennstoffdosierpumpe verändert, um eine Anpassung an die entsprechend der Abweichung sich ergebende geförderte Verbrennungsluftmenge vorzunehmen.

Die DE 101 44 404 A1 offenbart ein mobiles Zusatzheizgerät für ein Fahrzeug, bei welchem die Luftdichte der Verbrennungsluft erfasst wird, um in Abhängigkeit davon eine Abstimmung von geförderter Verbrennungsluftmenge und Brennstoffmenge vorzunehmen.

Es ist die Aufgabe der vorliegenden Erfindung, ein Verfahren zum Betreiben eines Fahrzeugheizgerätes im Verbrennungsbetrieb vorzusehen, mit welchem in einfacher Art und Weise für gleichbleibende Verbrennungsbedingungen in einem Brennerbereich des Fahrzeugheizgerätes gesorgt werden kann.

Gemäß der vorliegenden Erfindung wird die eingangs genannte Aufgabe gelöst durch ein Verfahren gemäß Anspruch 1 zum Betreiben eines Fahrzeugheizgerätes im Verbrennungsbetrieb, welches Fahrzeugheizgerät einen Brennerbereich, eine Brennstoffzuführeinheit zum Zuführen von Brennstoff zu dem Brennerbereich und ein Gebläse mit einem Elektroantriebsmotor zum Fördern von Verbrennungsluft zu dem Brennerbereich sowie eine Ansteuervorrichtung umfasst zur Ansteuerung des Elektroantriebsmotors und der Brennstoffzuführeinheit. Das Verfahren umfasst die folgenden Maßnahmen:
A) für einen in dem Brennerbereich vorzusehenden Verbrennungsbetrieb, Vorgeben einer zu dem Brennerbereich zu speisenden Brennstoffzuführmenge und in Zuordnung zu der vorgegebenen Brennstoffzuführmenge Vorgeben einer Ansteuermaßnahme für den Elektroantriebsmotor,
B) Überwachen der elektrischen Ist-Leistung des Elektroantriebsmotors bei Durchführung der Ansteuermaßnahme,
C) in Abhängigkeit von einer Änderung der elektrischen Ist-Leistung des Elektroantriebsmotors oder einer Abweichung derselben von einer in Zuordnung zu der vorgegebenen Brennstoffzuführmenge vorgegebenen elektrischen Soll-Leistung des Elektroantriebsmotors, Anpassen der Brennstoffzuführmenge.

Mit dieser Vorgehensweise wird dafür gesorgt, dass bei durch Dichteänderungen in der geförderten Verbrennungsluft erzeugten Veränderungen der Verbrennungsverhältnisse das Ansteigen des Schadstoffausstoßes vermieden werden kann.

Dabei ist vorgesehen, dass die Ansteuermaßnahme das Vorgeben einer Soll-Drehzahl für den Elektroantriebsmotor umfasst und das Einstellen der Drehzahl des Elektroantriebsmotors derart, dass sie im Bereich der Soll-Drehzahl liegt.

Alternativ umfasst die Ansteuermaßnahme das Anlegen einer Spannung mit vorgegebenem Tastverhältnis. Bei vorgegebenem Tastverhältnis der an den Elektroantriebsmotor angelegten elektrischen Spannung wird sich zunächst eine bestimmte Drehzahl einstellen. Nimmt die Dichte der geförderten Luft ab, so hat dies einen verminderten Strömungswiderstand und somit eine geringere Leistungsaufnahme im Elektroantriebsmotor zur Folge. In Anpassung an diese verminderte Leistungsaufnahme, die im Zusammenhang steht mit der geringeren geförderten Luftmenge, kann dann eine Anpassung der zugeführten Brennstoffmenge vorgenommen werden, so dass das Verhältnis von Verbrennungsluft und Brennstoffmenge in einem gewünschten Bereich gehalten werden kann.

Insbesondere kann vorgesehen sein, dass einer geringeren Ist-Leistung des Elektroantriebsmotors eine geringere Brennstoffzuführmenge zugeordnet ist.

Es hat sich gezeigt, dass für eine fest vorgegebene Drehzahl des Elektroantriebsmotors und somit eine fest vorgegebene Gebläsedrehzahl bei gleichen Umgebungsbedingungen, also insbesondere Temperatur und Luftdruck, ein direkt proportionaler Zusammenhang zwischen der im Elektroantriebsmotor verbrauchten elektrischen Leistung und der durch den Elektroantriebsmotor bzw. das Gebläse geförderten Luftmenge besteht. D.h., verändert sich die im Elektroantriebsmotor verbrauchte elektrische Leistung in bekanntem Ausmaß, so hat sich direkt proportional dazu auch die Luftmasse in einem entsprechenden Ausmaß verändert. Dieser Zusammenhang kann erfindungsgemäß weiterhin dafür genutzt werden, dass die Brennstoffzuführmenge gemäß einem direkt proportionalen Zusammenhang mit der Ist-Leistung des Elektroantriebsmotors angepasst wird.

Die vorangehend beschriebene Vorgehensweise mit Anpassung der Brennstoffzuführmenge in Abhängigkeit von einer Variation oder Abweichung der im Elektroantriebsmotor verbrauchten elektrischen Leistung ist vor allem, aber nicht nur, dann besonders vorteilhaft, wenn der Elektroantriebsmotor bzw. das Gebläse in einer Grenz-Leistungsstufe betrieben wird, also beispielsweise eine Erhöhung der Drehzahl zum Erhöhen der geförderten Verbrennungsluftmenge nicht mehr möglich ist. In diesem Falle kann dann durch Anpassen der Brennstoffzuführmenge dafür gesorgt werden, dass entsprechend der veränderten Verbrennungsluftmenge gleich bleibende Verbrennungsbedingungen, wenngleich bei entsprechend auch geänderter Heizleistung des Heizgerätes, bereitgestellt werden können.

Die vorliegende Erfindung wird nachfolgend mit Bezug auf die beiliegenden Zeichnungen detailliert beschrieben. Es zeigt:
- Fig. 1: eine skizzenartige Darstellung eines Fahrzeugheizsystems;
- Fig. 2: im Diagramm, das den Zusammenhang der in einem Verbrennungsluftgebläse geförderten Verbrennungsluftmenge mit der Gebläsedrehzahl, der Gebläseleistung bzw. dem CO₂-Ausstoß zeigt;
- Fig. 3: ein Diagramm, das den Zusammenhang der geförderten Verbrennungsluftmenge mit der Gebläseleistung für verschiedene Umgebungsbedingungen und verschiedene Drehzahlen darstellt.

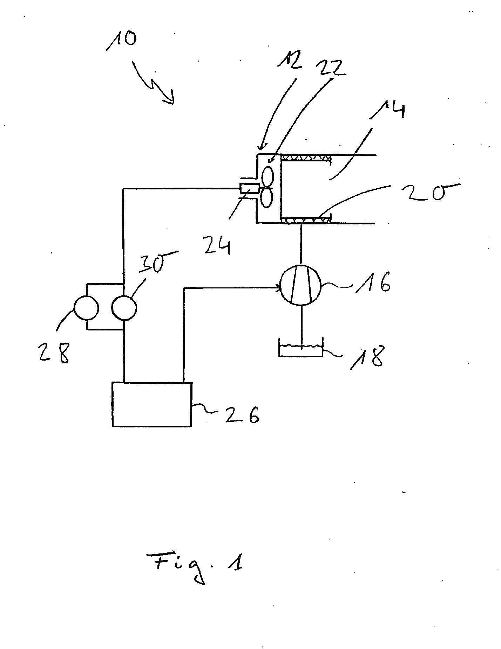

In Fig. 1 ist ein Fahrzeugheizgerät 10, wie es beispielsweise als Standheizung oder Zuheizer betrieben werden kann, in prinzipieller Ansicht dargestellt. Das Heizgerät 10 umfasst einen Brennerbereich 12 mit einer Brennkammer 14, in welche über eine Dosierpumpe 16 als Brennstoff aus einem Kraftstoffreservoir 18 flüssiger Kraftstoff eingespeist werden kann. Im Falle eines Verdampferbrenners kann dieser Kraftstoff in ein poröses Verdampfermedium 20 geleitet werden, darin durch Kapillarförderwirkung verteilt und in Richtung zur Brennkammer 14 hin abgedampft werden. Die zur Verbrennung mit dem Brennstoffdampf erforderliche Verbrennungsluft wird durch ein Gebläse 22 in die Brennkammer 14 geleitet. Das Gebläse 22 weist einen Elektrontriebsmotor 24 auf, der, ebenso wie die Dosierpumpe 16, unter der Ansteuerung einer Ansteuervorrichtung 26 steht. Diese Ansteuervorrichtung 26 ist dazu ausgebildet, je nach erforderlichem Verbrennungsbetrieb, also im Allgemeinen nach geforderter Heizleistung, die Dosierpumpe 16 und das Gebläse 12, also den Elektroantriebsmotor 24 so aufeinander abgestimmt anzusteuern, dass die jeweils in die Brennkammer 14 eingespeisten Mengen von Kraftstoff und Verbrennungsluft zu dem gewünschten Verbrennungsergebnis führen, insbesondere auch unter Berücksichtigung einer möglichst schadstoffarmen Verbrennung.

Um die nachfolgend noch detaillierter beschriebene erfindungsgemäße Art der Ansteuerung insbesondere des Elektroantriebsmotors 24 vorzunehmen, benötigt die Ansteuervorrichtung 26 Information, die im Zusammenhang steht mit der vom Elektroantriebsmotor aufgenommenen elektrischen Leistung bzw. diese wiedergibt. Hierzu können beispielsweise als separate Baugruppe oder auch als Teil der Ansteuervorrichtung 26 eine Spannungsmessvorrichtung 28 und eine Strommessvorrichtung 30 vorgesehen sein. Aus dem Produkt aus Spannung und Strom kann bekanntermaßen die elektrische Leistung bestimmt werden. Im Allgemeinen wird die Ansteuervorrichtung 26 den Elektroantriebsmotor 24 mit einem getakteten Signal ansteuern, das auf der Grundlage einer allgemein in einem Bordspannungssystem fest vorgegebenen Ausgangsspannung mit einem für einen jeweiligen Betriebszustand gewählten Tastverhältnis dann zur Folge hat, dass am Elektromotor 24 eine in direktem Zusammenhang mit dem gewählten Tastverhältnis stehende mittlere Spannung anliegt, die selbstverständlich zu einem mittleren Stromfluss führen wird. Diese beiden Größen werden dann letztendlich auch erfasst bzw. zur Bestimmung der elektrischen Leistung ausgewertet.

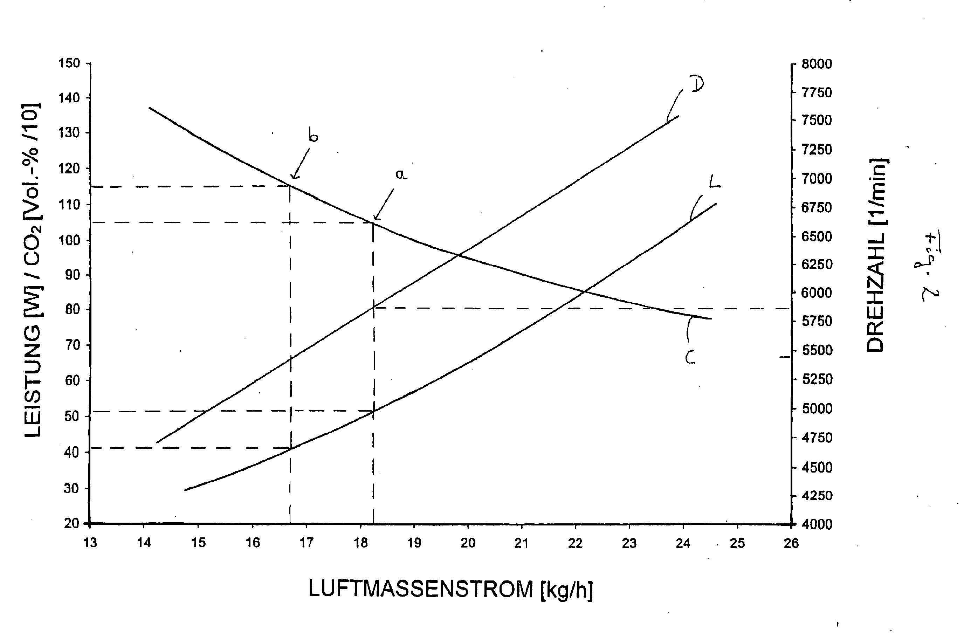

Die Fig. 2 zeigt ein Diagramm, das verschiedene bei dem Heizgerät 10 der Fig. 1 auftretende physikalische Größen repräsentiert. So zeigt die Kurve C den Volumenprozentanteil von CO₂ in den Verbrennungsabgasen bei einem Verbrennungszustand, bei dem die in ein Fahrzeugheizgerät eingespeiste Brennstoffzuführmenge bei 1,2 I/h liegt. Man erkennt, dass mit zunehmendem Luftmassenstrom, also der durch das Gebläse 12 geförderten Luftmenge, der Volumenanteil an CO₂ abnimmt. Die Kurve D zeigt den näherungsweise linearen Zusammenhang zwischen der Drehzahl des Elektroantriebsmotors 24 und dem geförderten Luftmassenstrom, während die Kurve L den Zusammenhang zwischen der im Elektroantriebsmotor 24 aufgenommenen bzw. verbrauchten elektrischen Leistung und dem Luftmassenstrom darstellt.

Es sei nun angenommen, dass das Fahrzeugheizgerät 10 grundsätzlich so eingestellt wird, dass es auch unter Berücksichtigung anderer Einflussgrößen bei einem Betriebspunkt a arbeitet. D.h., der Elektroantriebsmotor 24 arbeitet mit einer Drehzahl im Bereich von etwa 5.800 Umdrehungen pro Minute, was bei den gegebenen Umgebungsbedingungen einer elektrischen Leistung von etwa 51 W entspricht. Bewegt sich ein diese Heizeinrichtung 10 aufweisendes Fahrzeug auf einer Bergstraße bergauf, so nimmt bei zunächst angenommener konstanter Drehzahl des Elektroantriebsmotors 24 auf Grund der mit zunehmender Höhe abnehmenden Luftdichte auch der geförderte Luftmassenstrom ab. Eine Höhendifferenz von etwa 1.000m entspricht einem Übergang zum Arbeitspunkt b, bei dem, gleiche Drehzahl des Elektroantriebsmotors 24 vorausgesetzt, der Luftmassenstrom bei etwa 16,7kg/h liegt. Auf Grund der geringeren Dichte der geförderten Luft ist der Widerstand, gegen welchen der Elektroantriebsmotor 24 arbeiten muss, auch geringer, so dass auch die abgeforderte elektrische Leistung abnimmt, nämlich auf etwa 41 W.

Diese Veränderung des Betriebspunktes führt bei grundsätzlich gleich gehaltener Brennstoffzuführmenge also zu einem deutlich höheren Volumenanteil an CO₂ und beeinträchtigt allgemein die Betriebscharakteristik des Brennerbereichs 12.

Dieser an sich ungewünschten Entwicklung kann dadurch entgegengewirkt werden, dass im normalen Verbrennungsbetrieb der Elektroantriebsmotor 24 des Gebläses 22 nicht in einem Drehzahlregelvorgang angesteuert wird, sondern unter Berücksichtigung der aufgenommenen elektrischen Leistung. Wie bereits ausgeführt, besteht zwischen der geförderten Luftmenge und der dazu erforderlichen elektrischen Leistung ein enger Zusammenhang. Insbesondere wurde erkannt, dass die im Elektroantriebsmotor 24 aufgenommene elektrische Leistung näherungsweise proportional ist zum Quadrat der Luftdichte. Eine beispielsweise beim Bergauffahren des Fahrzeugs abnehmende Luftdichte führt also, wie auch das Diagramm der Fig. 2 zeigt, zu einer geringeren Leistungsaufnahme im Elektroantriebsmotor 24. Wird die aufgenommene elektrische Leistung jedoch erhöht, beispielsweise durch Erhöhen des Tastverhältnisses der am Elektroantriebsmotor 24 anliegenden Spannung, was im Allgemeinen zu einer Drehzahlerhöhung führen wird, so wird die Abnahme der geförderten Luftmenge auf Grund geringerer Luftdichte durch die höhere Drehzahl des Elektroantriebsmotors 24 zumindest zum Teil kompensiert bzw. dem Bilden eines zu fetten Gemisches entgegengewirkt. Die vorliegende Erfindung nutzt dies dazu, dass also für einen bestimmten Verbrennungsbetrieb des Fahrzeugheizgerätes 10, im Allgemeinen also eine bestimmte gewollte Heizleistung, eine Soll-Leistung für den Elektroantriebsmotor 24 vorgegeben wird. Dieser Zusammenhang zwischen geforderter Heizleistung und der zugeordneten elektrischen Leistungsaufnahme im Elektroantriebsmotor 24 kann beispielsweise im Versuch bestimmt werden. Dabei besteht selbstverständlich auch ein Zusammenhang mit der einzuspeisenden Kraftstoffzuführmenge. Für eine bestimmte Heizleistung ist im Allgemeinen eine bestimmte Kraftstoffzuführmenge erforderlich, die wiederum mit einer erforderlichen Luftmenge gemischt werden muss, um den gewünschten Verbrennungsbetrieb einzustellen. So besteht also ein enger Zusammenhang zwischen erforderlicher Heizleistung, Kraftstoffzuführmenge und Luftmassenstrom, der, wie vorangehend dargelegt, eng verknüpft ist mit der elektrischen Leistungsaufnahme im Elektroantriebsmotor 24.

Es wird also für den Elektroantriebsmotor 24 in Zuordnung zu einem bestimmten gewünschten Verbrennungsbetrieb eine Soll-Leistung vorgegeben. Im Betrieb wird dann diese Soll-Leistung mit der in vorangehender Art und Weise bestimmbaren Ist-Leistung verglichen. Übersteigt die Abweichung zwischen diesen beiden Größen ein vorbestimmtes Ausmaß, so kann dann durch Anpassung der Ist-Leistung dafür gesorgt werden, dass diese wieder in den Bereich der Soll-Leistung gebracht wird. D.h., es kann beispielsweise eine Leistungsregelung stattfinden. Bei Bergauffahrt eines Fahrzeugs wird sich dies also so darstellen, dass ausgehend von einer vergleichsweise guten Übereinstimmung zwischen Soll-Leistung und Ist-Leistung mit abnehmender Luftdichte zunächst die Leistungsaufnahme im Elektromotor 24 sinkt oder sinken würde. Dies wird erkannt, so dass durch Erhöhen des Tastverhältnisses, was eine Erhöhung der Drehzahl nach sich zieht, auch die Leistungsaufnahme wieder angeboben wird und in den Bereich der Soll-Leistung gebracht werden kann. Das Verhältnis von Kraftstoffzuführmenge und Luftmassenstrom kann somit näherungsweise konstant gehalten werden bzw. in einem Bereich gehalten werden, der zu noch akzeptierbaren Veränderungen im Verbrennungszustand führt.

Es kann nun grundsätzlich der Fall eintreten, dass auf Grund zu starker Abnahme der Luftdichte eine derartige Anhebung des Tastverhältnisses und somit auch der Drehzahl des Elektroantriebsmotors 24 erforderlich wäre, um die Leistungsaufnahme wieder in den gewünschten Bereich zu bringen, dass der Elektroantriebsmotor 24 bzw. das Gebläse 22 in einen Drehzahlbereich gelangt, der auf Grund konstruktiver Auslegungsbedingungen an sich kritisch ist und vermieden werden sollte. D.h., eine derartige Abnahme der Luftdichte könnte dann nicht mehr ausreichend kompensiert werden. Ist dies der Fall, kann also bei dem Versuch, die Leistungsaufnahme des Antriebsmotors im gewünschten Bereich zu halten, die Drehzahl desselben nicht weiter angehoben werden, so kann im Gegenzug dann die Brennstoffzuführmenge gemindert werden. Einer geminderten Brennstoffzuführmenge ist zur Erlangung eines gewünschten Verbrennungszustands dann wieder ein geringerer Luftmassenstrom zugeordnet, so dass infolgedessen auch die Soll-Leistung gesenkt werden kann und der Elektroantriebsmotor 24 wieder in einem unkritischen Bereich arbeiten kann. Dies hat grundsätzlich zwar zur Folge, dass die im Brennerbereich 12 bereitgestellte Heizleistung abnimmt, was jedoch angesichts der Tatsache, dass der Versuch, die an sich gewünschte Heizleistung aufrecht zu erhalten, zu Problemen im Bereich des Gebläses 22 führen könnte, grundsätzlich akzeptierbar ist.

Es hat sich gezeigt, dass bei herkömmlichen Gebläsetypen durch das Konstanthalten der Leistung des Elektroantriebsmotors einer Änderung im Luftmassenstrom, hervorgerufen durch eine Dichteänderung, nur teilweise entgegengewirkt werden kann. Es könnte also ein Zustand auftreten, in dem trotz dieser einer Variation im Luftmassenstrom entgegenwirkenden Maßnahme nicht die für eine bestimmte ausgewählte Brennstoffzuführmenge erforderliche Luftmenge eingespeist werden kann. Es kann deshalb so vorgegangen werden, dass selbst dann, wenn das Erreichen bestimmter Drehzahlgrenzen noch nicht erkennbar ist, auf die Brennstoffzuführmenge Einfluss genommen wird, wenn im Bereich des Gebläses bzw. des Elektroantriebsmotors 24 Maßnahmen erforderlich sind, um die elektrische Leistung konstant zu halten, also einer Luftdichtenabnahme entgegenzuwirken. Da bei derartigen Elektroantriebsmotoren 24 im Allgemeinen eine getaktete Spannung angelegt wird, also mit einem bestimmten Tastverhältnis gearbeitet wird, machen sich Maßnahmen zum Anpassen bzw. Konstanthalten der Leistung in Variationen der mittleren angelegten Spannung, also auch in Variationen des Tastverhältnisses, erkennbar. Nimmt die Luftdichte ab, so wird der Elektroantriebsmotor weniger belastet und insofern auch der über dessen Wicklungen fließende elektrische Strom abnehmen. Dieser Abnahme wird durch ein erhöhtes Tastverhältnis entgegengewirkt, so dass bei dann wieder gleichgehaltener elektrischer Leistung nicht nur eine höhere Drehzahl des Elektroantriebsmotors 24 erreicht wird, sondern tatsächlich auch ein höheres Tastverhältnis und somit eine höhere mittlere Spannung vorhanden sind. Diese Variation im Tastverhältnis steht also im Zusammenhang mit Variationen in der Luftdichte. Infolge dessen wird es möglich, die Variationen im Tastverhältnis dazu zu nutzen, auch definiert auf die Brennstoffzuführmenge einzuwirken. So kann beispielsweise für einen bestimmten Grundzustand, in welchem die Umgebungsbedingungen, insbesondere also auch die Luftdichte, bekannt sind bzw. in einem gewissen bekannten Bereich liegen, einerseits die zum Erreichen einer bestimmten Heizleistung erforderliche Brennstoffzuführmenge ausgewählt werden, und kann andererseits die erforderliche Luftmenge ausgewählt werden bzw. die hierfür erforderliche Drehzahl und somit auch die erforderliche elektrische Leistung im elektrischen Antriebsmotor, die wiederum repräsentiert ist durch ein bestimmtes Tastverhältnis. Dieses für diesen Grundzustand vorgegebene Tastverhältnis kann für spätere Variationen als Referenz dienen. Ist ein zum Erreichen der gewollten elektrischen Leistung des Elektroantriebsmotors 24 erforderliches Tastverhältnis über dem Referenzwert, so ist dies ein Indikator dafür, dass der Motor weniger belastet ist, also eine geringere Luftdichte vorherrscht, liegt es darunter, ist dies ein Indikator für eine höhere Luftdichte und dementsprechend eine höhere Belastung des Elektroantriebsmotors. Die Abweichung des Tastverhältnisses von dieser vorgegebenen Referenz, die ein Indikator für die Stärke der Variation in der Luftdichte ist, kann dazu genutzt werden, in entsprechendem Ausmaß auch die Brennstoffzuführmenge zu variieren. Mit höherem Tastverhältnis kann die Brennstoffzuführmenge gemindert werden, da dann im Allgemeinen ein Zustand vorliegt, in dem zwar die geringere Luftdichte durch eine bei konstant gehaltener elektrischer Leistung erhöhte Drehzahl kompensiert wird, jedoch nicht vollständig kompensiert wird. Um gleiche Verbrennungsbedingungen sicherstellen zu können, wird dann die Brennstoffzuführmenge gesenkt, so dass wieder das gleiche Verhältnis von Brennstoffzuführmenge und Verbrennungsluft erreicht werden kann.

Bei einer erfindungsgemäßen und unter der Berücksichtigung der Leistungsaufnahme des Elektroantriebsmotors ablaufenden Vorgehensweise kann vorgesehen sein, dass grundsätzlich in Zuordnung zu einem geforderten Verbrennungsbetrieb, also einer vorgegebenen oder erlangbaren Heizleistung, die Kraftstoffzuführmenge festgelegt wird und in Verknüpfung mit dieser Kraftstoffzuführmenge auch eine entsprechende Ansteuerung des Elektromotors 24 beispielsweise mit vorgegebenem Tastverhältnis gewählt wird. Bewegt sich ein derartiges Fahrzeug dann beispielsweise in Richtung bergauf und nimmt die Luftdichte und mit dieser der Förderwiderstand für das Gebläse 22 ab, so führt ein beibehaltenes Tastverhältnis auf Grund des geringeren Förderwiderstands grundsätzlich zu einer etwas erhöhten Drehzahl und einem abnehmenden über den Elektroantriebsmotor 24 fließenden elektrischen Strom. D.h., es nimmt die Leistungsaufnahme ab. Dies wird erfasst und in der Ansteuervorrichtung 26 dazu genutzt, in Anpassung an die geringere Leistungsaufnahme, also die geringere Ist-Leistung, und den damit auch entsprechend verminderten Luftmassenstrom auch die Brennstoffzuführmenge zu verändern. Auch auf diese Art und Weise kann dafür gesorgt werden, dass ohne der Notwendigkeit, eine bestimmte Soll-Leistung vorzugeben, unter Berücksichtigung der Ist-Leistung eine Anpassung der in Richtung Brennkammer 14 gespeisten Kraftstoffmenge erfolgt, so dass auch auf diese Art und Weise das Verhältnis von Verbrennungsluft und zur Verbrennung zur Verfügung stehendem Kraftstoff in einem gewünschten Bereich gehalten werden kann. Ebenso wie bei der vorangehend beschriebenen Vorgehensweise, bei welcher auch bei durchgeführter Leistungsregelung des Elektroantriebsmotors 24 in Übereinstimmung mit der dennoch zu erwartenden Abnahme in der geförderten Luftmenge die Brennstoffzuführmenge gesenkt wird, wird also hier eine Anpassung erzielt, welche für gleichbleibende Verbrennungsbedingungen sorgt. Da bei dieser Vorgehensweise das Tastverhältnis beibehalten bleibt, also die Leistung und somit auch die Drehzahl bei sinkender Luftdichte nicht erhöht werden, findet eine Teil-Kompensation der abnehmenden Luftdichte nur dadurch statt, dass aufgrund der geringeren mechanischen Belastung des Elektroantriebsmotors dieser mit etwas höherer Drehzahl arbeitet und somit auch etwas mehr Luft fördern wird. Zum Konstanthalten der Verbrennungsbedingungen muss insofern hier auch eine stärkere Anpassung der Brennstoffzuführmenge stattfinden, als in demjenigen Falle, in welchem durch das Konstanthalten der Leistung auch eine stärkere Anhebung der Drehzahl bei abnehmender Luftdichte erreicht wird.

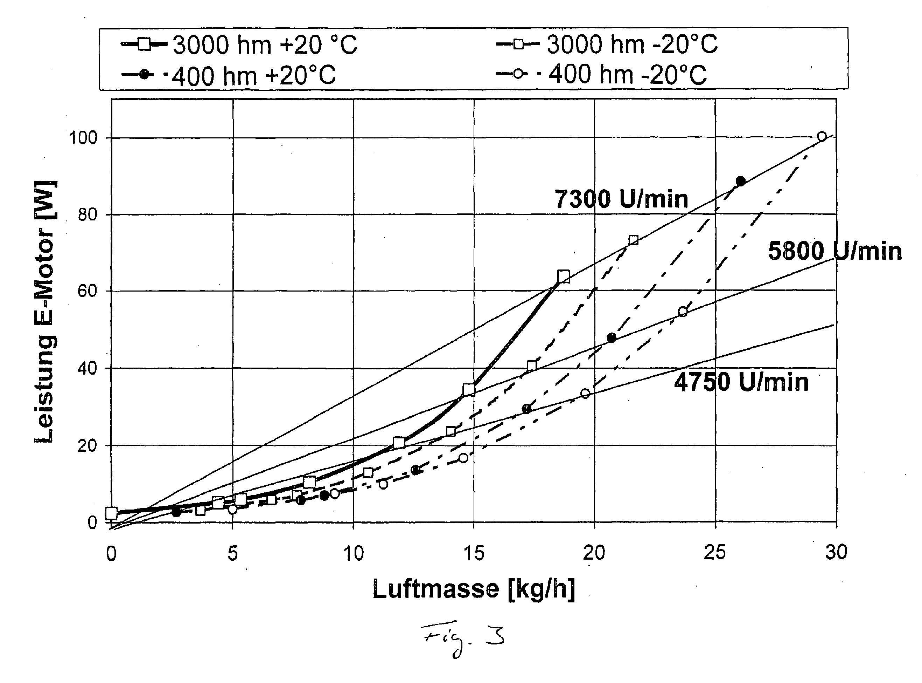

Bei einer weiteren Variante des erfindungsgemäßen Verfahrens kann als Ansteuermaßnahme eine Drehzahlregelung in Zuordnung zu einem gewünschten Verbrennungsbetrieb erfolgen. Hier kann also für einen bestimmten Grundumgebungszustand wieder in Zuordnung zu einer vorgegebenen Brennstoffzuführmenge auch eine bestimmte Drehzahl des Elektroantriebsmotors 24 vorgegeben werden und diese dann entsprechenden Ansteuermaßnahmen konstant gehalten werden. Nimmt die Luftdichte ab, so führt dies dazu, dass aufgrund der geringeren mechanischen Belastung des Elektroantriebsmotors 24 die Drehzahl bei geringerer elektrischer Leistung konstant gehalten werden kann. Die Abnahme der elektrischen Leistung kann wieder als Indikator für die Luftdichtenvariation genutzt werden, um entsprechend auch die Brennstoffzuführmenge anzupassen. Diese Vorgehensweise wird nachfolgend auch unter Bezugnahme auf das Diagramm der Fig. 3 detailliert erläutert.

Die Fig. 3 zeigt ein Diagramm, in welchem für verschiedene Umgebungsbedingungen der Zusammenhang zwischen der elektrischen Leistung des Elektromotors 24 und der geförderten Verbrennungsluftmenge, in Fig. 3 als Luftmasse bezeichnet, dargestellt ist. Insbesondere sind die vier mit durchgezogener Linie, gestrichelter Linie, einfach gepunkteter Linie und zweifach gepunkteter Linie repräsentierten Umgebungsbedingungen durch jeweils eine Höhenangabe und eine Temperaturangabe definiert. Diese beiden Angaben, Höhe und Temperatur, beeinflussen primär den Luftdruck bzw. die Luftdichte und somit die bei einer bestimmten Drehzahl durch das Gebläse 22 geförderte Verbrennungsluftmenge. Die Fig. 3 zeigt dabei für drei verschiedene Betriebspunkte des Gebläses 22 bzw. des Elektroantriebsmotors 24, dass für jeden dieser Drehzahlzustände bzw. Betriebspunkte des Elektroantriebsmotors 24 die für die zugeordneten Umgebungsbedingungen erhaltenen Daten bzw. Messpunkte auf einer Geraden liegen. D.h., für einen jeweils vorgegebenen Betriebspunkt bzw. eine vorgegebene Drehzahl des Elektroantriebsmotors 24 besteht, definiert durch die sich ergebenden Geraden, ein direkt proportionaler Zusammenhang zwischen der elektrischen Leistung des Elektroantriebsmotors 24 und der durch das Gebläse 22 geförderten Verbrennungsluftmenge. Dies sei beispielsweise anhand der in Zuordnung zum Betriebspunkt "5800 U/min" vorhandenen Gerade erläutert. Dort repräsentiert der am weitesten rechts liegende Messpunkt, der dem Umgebungszustand 400 Höhenmeter und -20°C zugeordnet ist, den Zustand größter Luftdichte. In diesem Zustand muss der Elektroantriebsmotor 24 gegen den größten mechanischen Widerstand arbeiten, was eine entsprechend hohe elektrische Leistung bedingt. Gleichzeitig wird mit dieser vergleichsweise hohen elektrischen Leistung auf Grund der hohen Luftdichte auch eine vergleichsweise große Verbrennungsluftmenge gefördert. Der nächst niedrigere Messpunkt ist den Umgebungsbedingungen 400 Höhenmeter und +20°C zugeordnet. Auf Grund des erheblichen Temperaturunterschieds wird die Luft eine geringere Dichte haben, was bedingt, dass der Motor gegen einen geringeren mechanischen Widerstand arbeiten muss und daher zum Konstanthalten der Drehzahl bei 5.800 U/min eine geringere elektrische Leistung erfordert. Gleichzeitig wird auf Grund der geringeren Luftdichte bei dieser Drehzahl auch eine geringere Luftmenge gefördert. Es folgt dann der Messpunkt, der den Umgebungsbedingungen 3000 Höhenmeter und -20°C zugeordnet ist. Auf Grund der deutlich größeren Höhe liegt eine wesentlich geringere Luftdichte vor, obgleich nunmehr wieder eine deutlich niedrigere Temperatur vorhanden ist. Der mechanische Widerstand und somit die erforderliche elektrische Leistung sind entsprechend geringer, ebenso wie die geförderte Luftmenge. Liegt bei 3.000 Höhenmetern dann eine Temperatur von +20°C vor, so bedeutet dies eine weiter verringerte Luftdichte und dementsprechend auch eine geringere elektrische Leistung, einhergehend mit einer weiter reduzierten geförderten Luftmenge.

Dieser für jede Drehzahl vorhandene direkt proportionale Zusammenhang der geförderten Luftmenge mit der elektrischen Leistung des Elektroantriebsmotors für die verschiedenen Umgebungsbedingungen wird erfindungsgemäß nunmehr dazu genutzt, das Verhältnis von Brennstoffzuführmenge und zugeführter Verbrennungsluft so einzustellen, dass die gewünschten Verbrennungsbedingungen erlangt werden. Hierzu sei beispielsweise angenommen, dass die maximale Heizleistungsstufe erforderlich ist, was bedeutet, dass eine vergleichsweise große Brennstoffzuführmenge erforderlich ist und dementsprechend dieser zugeordnet auch eine entsprechende Verbrennungsluftmenge erforderlich ist. Hier kann dann für einen bestimmten Grundzustand, also beispielsweise bei den Umgebungsbedingungen 400 Höhenmeter und +20°C, also einem Zustand, in dem durch das Gebläse 22 ca. 27 kg Luft/h gefördert werden, auch eine definierte Brennstoffzuführmenge vorgegeben werden. Wird das Fahrzeugheizgerät dann in diesem Zustand betrieben, so kann durch Überwachung der elektrischen Leistung des Elektroantriebsmotors 24 überprüft werden, ob das Fahrzeugheizgerät tatsächlich im gewünschten Verbrennungsbetrieb arbeitet, also ob in Zuordnung zu der für diese maximale Heizleistungsstufe vorgegebenen Brenntsoffzuführmenge auch die erforderliche Verbrennungsluftmenge, also beispielsweise 27 kg/h, gefördert wird. Stimmt bei der Drehzahl von 7.300 U/min bei diesem Vergleich die ermittelte Ist-Leistung des Elektroantriebsmotors 24 mit der für diesen Grundzustand an sich zu erwartenden Soll-Leistung von etwa 88 W überein, so ist es ein Indikator dafür, dass Brennstoffmenge und Verbrennungsluftmenge im gewünschten Verhältnis stehen.

Liegen jedoch beispielsweise Umgebungsbedingungen vor, bei welchen bei gleicher Seehöhe die Temperatur auf -20°C gesunken ist, so führt dies dazu, dass bei weiterhin festgehaltener Drehzahl von 7.300 U/min der Betriebspunkt des Elektroantriebsmotors 24 sich auf der zugeordneten Gerade nach oben verschiebt. Auf Grund der dann vorhandenen höheren Luftdichte wird bei gleicher Drehzahl eine elektrische Leistung von etwa 100 W erforderlich, einhergehend damit, dass die geförderte Luftmenge auf ca. 29 kg/h ansteigt. Dies hätte zur Folge, dass das dann vorhandene Gemisch zu mager ist, mit der Gefahr des Flammabrisses oder einer ungewünschten hohen Schadstoffkonzentration in den Verbrennungsabgasen. Da also erkannt werden konnte, dass die elektrische Leistung des Elektroantriebsmotors 24 um ein bestimmtes Ausmaß angestiegen ist, nämlich von 89 W auf etwa 100 W, kann darauf geschlossen werden, dass in entsprechendem Ausmaß, bedingt durch den direkt proportionalen Zusammenhang, auch die Luftmenge angestiegen ist. Dieser direkt proportionale Zusammenhang kann dazu genutzt werden, dass im gleichen prozentualen Ausmaß auch die Brennstoffzuführmenge erhöht wird. Dies führt insgesamt dann zu einer größeren Gemischmenge, die verbrannt wird, jedoch bei gleicher Gemischzusammensetzung und somit im Wesentlichen gleichen Verbrennungscharakteristiken.

Entsprechend kann selbstverständlich auch Verfahren werden, wenn der Betriebspunkt des Elektroantriebsmotors 24 sich auf der einer jeweils ausgewählten Drehzahl zugeordneten Gerade in der anderen Richtung, also in Richtung geringerer elektrischer Leistung und dementsprechend auch geringerer geförderter Verbrennungsluftmenge, bewegt. In diesem Falle wird dann eine Anpassung der Brennstoffzuführmenge in der entsprechenden Proportion nach unten hin vorgenommen.

Selbstverständlich kann diese Vorgehensweise nicht nur dann gewählt werden, wenn das Fahrzeugheizgerät in einer Grenzleistungsstufe arbeitet. Auch bei geringeren geforderten Heizleistungen und entsprechend geringeren Brennstoffzuführmengen und geringeren Verbrennungsluftzuführmengen kann durch Ausnutzung des vorangehend beschriebenen direkt proportionalen Zusammenhangs zwischen der Leistung des Elektroantriebsmotors und der bei einer bestimmten Drehzahl dann geförderten Verbrennungsluftmenge im gleichen direkt proportionalen Ausmaß auch eine Anpassung der Brennstoffzuführmenge vorgenommen werden.

Im Gegensatz zu den vorangehend beschriebenen Vorgehensweisen wird hier keine Teil-Kompensation der veränderten Luftdichte durch eine angepasste Drehzahl erlangt, da die Drehzahl tatsächlich konstant gehalten wird. Dies hat zur Folge, dass zum Beibehalten der Verbrennungsbedingungen die Brennstoffzuführmenge noch stärker angepasst werden muss, was zur Folge hat, dass beispielsweise bei Luftdichtenabnahme bei dieser Vorgehensweise die stärkste Absenkung der Brennstoffzuführmenge erforderlich sein wird und dementsprechend auch die erreichbare Heizleistung im Fahrzeugheizgerät am stärksten absinken wird.

Der vorangehend beschriebene direkt proportionale Zusammenhang zwischen der elektrischen Leistung des Elektroantriebsmotors und der geförderten Luftmenge und dementsprechend auch der erforderlichen Brenntsoffzuführmenge kann gemäß einer weiteren erfindungsgemäßen Vorgehensweise auch dazu genutzt werden, bei beibehaltener Heizleistung des Fahrzeugheizgerätes für konstante Verbrennungsbedingungen zu sorgen. Bei dieser Vorgehensweise wird also versucht, die Brennstoffzuführmenge konstant zu halten und unter Ausnutzung des vorangehend beschriebenen und in Fig. 3 erkennbaren Zusammenhangs den Betriebspunkt des Elektroantriebsmotors 24 bzw. des Gebläses 22 so zu verschieben bzw. festzulegen, dass die für die vorgegebene Brennstoffzuführmenge auch erforderliche Verbrennungsluftmenge gefördert wird. Auch dies wird nachfolgend mit Bezug auf die Fig. 3 erläutert.

Hier sei zunächst beispielsweise angenommen, dass wiederum für definierte Umgebungsbedingungen von 400 Höhenmetern und +20°C bei einer vergleichsweise niedrigen Heizleistungsstufe eine Brennstoffzuführmenge vorgegeben wird, die eine Luftmenge von etwa 17 kg/h erfordert. Dies würde bedeuten, dass für diesen Grundzustand eine Grund-Solldrehzahl von etwa 4.750 U/min für den Elektroantriebsmotor 24 vorgegeben wird und einhergehend mit der Brennstoffeinspeisung auch eine Drehzahlregelung für den Elektroantriebsmotor 24 erfolgt. Wird also der Elektroantriebsmotor 24 mit dieser Drehzahl betrieben und liegen die Umgebungsbedingungen 400 Höhenmeter und +20°C vor, so hat dies zur Folge, dass die Ist-Leistung des Elektroantriebsmotors bei etwa 29 W liegt und entsprechend auch die Verbrennungsluftmenge von etwa 17 kg/h gefördert wird, was, dies sei unterstellt, die erforderliche Verbrennungsluftmenge für die vorgegebene Brennstoffzuführmenge ist.

Ändern sich nunmehr die Umgebungsbedingungen bzw. wird das Gesamtsystem bei dieser geforderten Heizleistung und der dementsprechend vorgegebenen Grund-Soll-Drehzahl 4.750 U/min bei anderen Umgebungsbedingungen betrieben, so bedeutet dies eine Verschiebung des Arbeitspunktes des Elektroantriebsmotors 24 auf der untersten Gerade in Fig. 3. Liegen beispielsweise dann Umgebungsbedingungen vor, die dem Zustand 3.000 Höhenmeter und -20°C entsprechen, so liegt der Arbeitspunkt des Elektroantriebsmotors 24 dann auf dieser Geraden dort, wo die gestrichelte Linie diese Gerade schneidet. Bei 4.750 U/min arbeitet der Elektroantriebsmotor dann mit einer Leistung von etwa 24 W, wobei in diesem Zustand durch das Gebläse 22 dann eine Verbrennungsluftmenge von etwa 14 kg/h gefördert wird. Daraus wird zunächst erkennbar, dass bei einer bestimmten vorgegebenen Soll-Drehzahl des Elektroantriebsmotors 24 die erforderliche Luftmenge tatsächlich nur bei einem Umgebungszustand, dieser im Wesentlichen definiert durch die Luftdichte, gefördert werden kann und dies sich dadurch erkennbar macht, dass in Zuordnung zu dieser Soll-Drehzahl und der zu fördernden Luftmenge auch eine bestimmte Soll-Leistung des Elektroantriebsmotors erkannt werden müsste. Weicht die Ist-Leistung von dieser Soll-Leistung ab, so ist dies ein Indikator dafür, dass nicht die korrekte Luftmenge gefördert wird, beispielsweise bei Abweichung nach unten zu wenig Verbrennungsluft gefördert wird.

Wird also für den vorangehend beschriebenen Fall festgestellt, dass bei 4.750 U/min der Elektroantriebsmotor 24 tatsächlich mit einer Leistung von etwa 24 W arbeitet, so wird gemäß der vorliegenden Erfindung dann eine Anpassung der Drehzahl des Elektroantriebsmotors vorgenommen. Da in diesem Falle erkannt werden kann, dass durch die zu geringe Ist-Leistung eine entsprechend zu geringe Luftmenge gefördert wird, wird die Soll-Drehzahl des Elektroantriebsmotors 24 entsprechend angepasst, in diesem Falle also angehoben, um eine größere Luftmenge fördern zu können. Das Ziel dabei ist es, die Drehzahl so anzupassen, in diesem Falle also anzuheben, dass bei den dann vorliegenden Umgebungsbedingungen wieder eine Luftmenge gefördert wird, die derjenigen erforderlichen Luftmenge gleich ist, die in Zuordnung zu der vorgegebenen Brennstoffzuführmenge bei den Grund-Umgebungsbedingungen gefördert wird. Es sei beispielsweise angenommen, dass im vorliegenden Falle die Drehzahl dann auf 5.800 U/min erhöht wird. Bei den Umgebungsbedingungen, die 3.000 Höhenmetern und einer Temperatur von -20°C entsprechen, führt dies dazu, dass der Arbeitspunkt des Elektroantriebsmotors sich entlang der gestrichelten Linie nach oben bewegt, und zwar dorthin, wo diese gestrichelte Linie die der Drehzahl 5.800 U/min zugeordnete Gerade schneidet. In diesem Zustand arbeitet der Elektroantriebsmotor mit einer elektrischen Leistung von etwa 40 W, und durch den bekannten direkt proportionalen Zusammenhang zwischen der elektrischen Leistung und der geförderten Luftmenge kann erkannt werden, dass in diesem Zustand die geförderte Verbrennungsluftmenge wieder bei etwa 17 kg/h liegt, also wieder die für die vorgegebene Brennstoffzuführmenge erforderliche Verbrennungsluftmenge gefördert wird. Dies hat zur Folge, dass nachfolgend dann der Elektroantriebsmotor 24 mit 5.800 U/min betrieben wird. Es ist dann sichergestellt, dass wieder das erforderliche Verhältnis von Verbrennungsluft zu Brennstoff erlangt ist, so dass gleiche Verbrennungscharakteristiken und gleiche Heizleistung sichergestellt sind.

Führt eine Drehzahlanpassung zu der Erkenntnis, dass bei der dann vorhandenen angepassten Soll-Drehzahl der Elektroantriebsmotor bei einer Ist-Leistung arbeitet, die durch den direkt proportionalen Zusammenhang den Schluss auf eine zu geringe oder zu hohe Verbrennungsluftmenge zulässt, so kann durch Wiederholen der vorangehenden Verfahrensmaßnahmen, also durch erneutes Anpassen der Soll-Drehzahl, versucht werden, sich allmählich in einen Drehzahlbereich zu bewegen, der bei den gegebenen Umgebungsbedingungen sicherstellt, dass die erforderliche Verbrennungsluftmenge gefördert wird.

Bei dem vorangehend beschriebenen Verfahren kann also durch stufenweises Anpassen bzw. Erhöhen oder Senken der Soll-Drehzahl versucht werden, sich allmählich nach Durchlaufen von mehreren, jedoch möglichst wenigen Anpassungsschritten in einen Betriebsbereich zu bewegen, in dem die erforderliche Verbrennungsluftmenge gefördert wird, wobei dies dadurch erkennbar wird, dass für eine bestimmte dann angepasste Soll-Drehzahl auch die entsprechende für die erforderliche Luftmasse vorgegebene elektrische Soll-Leistung erreicht wird.

Mit der vorliegenden Erfindung wird es möglich, durch veränderte Umgebungsbedingungen, insbesondere durch einen abnehmenden Luftdruck bzw. eine abnehmende Luftdichte, allgemein auftretenden Änderungen in der Verbrennungscharakteristik entgegenzuwirken. Da auf diese Art und Weise die Verbrennungsbedingungen näherungsweise konstant gehalten werden können, und zwar in einem Bereich, der hinsichtlich der Effizienz einerseits und der Erzeugung von Schadstoffen und Ablagerungen im Fahrzeugheizgerät andererseits optimiert ist, wird es möglich, die Lebensdauer eines so arbeitenden Fahrzeugheizgerätes zu erhöhen. Ein elementarer Vorteil der erfindungsgemäßen Vorgehensweise ist, dass durch die Berücksichtigung der elektrischen Leistung des Elektroantriebsmotors Änderungen in der geförderten Verbrennungsluftmenge berücksichtigt bzw. kompensiert werden können, welche durch sich ändernde Umgebungsbedingungen hervorgerufen werden. Dabei ist es völlig unerheblich, auf Grund welcher Umstände die Umgebungsbedingungen sich ändern, also beispielsweise ob diese bedingt sind durch eine Temperaturänderung, eine Luftdruckänderung, eine Änderung in der Höhenlage oder dergleichen. Jedwede zu einer veränderten Transportcharakteristik des Gebläses führende Änderung kann durch Beobachtung der elektrischen Leistung des Elektromotors erkannt und in entsprechende Ansteuermaßnahmen umgesetzt werden.

## Patentansprüche

1. Verfahren zum Betreiben eines Fahrzeugheizgerätes im Verbrennungsbetrieb, welches Fahrzeugheizgerät (10) einen Brennerbereich (12), eine Brennstoffzuführeinheit (16) zum Zuführen von Brennstoff zu dem Brennerbereich (12) und ein Gebläse (22) mit einem Elektroantriebsmotor (24) zum Fördern von Verbrennungsluft zu dem Brennerbereich (12) sowie eine Ansteuervorrichtung (26) umfasst zur Ansteuerung des Elektroantriebsmotors (24) und der Brennstoffzuführeinheit (16), wobei das Verfahren die folgenden Maßnahmen umfasst:
A) für einen in dem Brennerbereich (12) vorzusehenden Verbrennungsbetrieb, Vorgeben einer zu dem Brennerbereich (12) zu speisenden Brennstoffzuführmenge und in Zuordnung zu der vorgegebenen Brennstoffzuführmenge Vorgeben einer Ansteuermaßnahme für den Elektroantriebsmotor (24), wobei die Ansteuermaßnahme das Vorgeben einer Soll-Drehzahl für den Elektroantriebsmotor (24) umfasst und das Einstellen der Drehzahl des Elektroantriebsmotors (24) derart, dass sie im Bereich der Soll-Drehzahl liegt, oder die Ansteuermaßnahme das Anlegen einer Spannung mit vorgebenem Tastverhältnis umfasst,
B) Überwachen der elektrischen Ist-Leistung des Elektroantriebsmotors (24) bei Durchführung der Ansteuermaßnahme,
C) in Abhängigkeit von einer Änderung der elektrischen Ist-Leistung des Elektroantriebsmotors (24) oder einer Abweichung derselben von einer in Zuordnung zu der vorgegebenen Brennstoffzuführmenge vorgegebenen elektrischen Soll-Leistung des Elektroantriebsmotors (24), Anpassen der Brennstoffzuführmenge.

2. Verfahren nach Anspruch 1,
**dadurch gekennzeichnet, dass** einer geringeren Ist-Leistung des Elektroantriebsmotors (24) eine geringere Brennstoffzuführmenge zugeordnet ist.

3. Verfahren nach Anspruch 2,
**dadurch gekennzeichnet, dass** die Brennstoffzuführmenge gemäß einem direkt proportionalen Zusammenhang mit der Ist-Leistung des Elektroantriebsmotors (24) angepasst wird.

## Claims

1. A method for operating a vehicle heating device in the combustion mode, the vehicle heating device (10) comprising a burner section (12), a fuel supply unit (16) for supplying fuel to the burner section (12) and a blower (22) with an electric drive motor (24) for conveying combustion air to the burner section (12) as well as an actuation device (26) for actuating the electric drive motor (24) and the fuel supply unit (16), said method comprising the following steps:
A) for a combustion operation provided in the burner section (12), predetermining a fuel supply quantity to be supplied to the burner section (12) and, associated to the predetermined fuel supply quantity, providing an actuation step for the electric drive motor (24), wherein said actuation step comprises setting a reference speed for the electric drive motor (24) and setting the speed of the electric drive motor (24) so that it is in the range of the reference speed or so that the actuation step comprises the application of a voltage with a preset duty cycle.
B) Monitoring of the actual electric performance (24) of the electric drive motor (24) when carrying out the actuation step.
C) Adjusting the fuel supply quantity depending on a modification of the actual electric performance of the electric drive motor (24) or a deviation of the latter from a predetermined electric reference performance of the electric drive motor (24) associated to the predetermined fuel supply quantity.

2. A method according to claim 1,
**characterized by** a smaller fuel supply quantity being associated to a lower actual performance of the electric drive motor (24).

3. A method according to claim 2,
**characterized by** the fuel supply quantity being adjusted to the actual performance of the electric drive motor (24) according to a directly proportional correlation.

## Revendications

1. Une méthode pour opérer un dispositif de chauffage de véhicule dans un mode de combustion, le dispositif de chauffage de véhicule (10) comprenant une zone brûleur (12), une unité d'alimentation en combustible (16) pour conduire du combustible à la zone de brûleur (12) et un ventilateur (22) avec un moteur d'actionnement électrique (24) pour conduire de l'air de combustion à la zone de brûleur et un dispositif de commande (26) pour commander le moteur d'actionnement électrique (24) et l'unité d'alimentation en combustible (16), la méthode comprenant les mesures suivantes :
A) pour un mode de combustion prévu dans la zone brûleur (12), déterminer une quantité d'alimentation en combustible à conduire à la zone de brûleur (12) et, associé à la quantité d'alimentation en combustible prédéterminée, déterminer une mesure de commande pour le moteur d'actionnement électrique (24), cette mesure de commande comprenant la détermination d'une vitesse de référence pour le moteur d'actionnement électrique (24) et le réglage de cette vitesse du moteur d'actionnement électrique (24) de sorte qu'elle soit dans l'intervalle de la vitesse de référence, ou cette mesure de commande comprenant l'application d'une tension avec un rapport impulsion/pause prédéterminé.
B) Surveiller la performance réelle du moteur d'actionnement électrique (24) en réalisant la mesure de commande,
C) En fonction du changement de la performance électrique réelle du moteur d'actionnement électrique (24) ou d'une déviation de cette dernière de la performance électrique de référence prédéterminée du moteur d'actionnement électrique (24) associée à la quantité d'alimentation en combustible prédéterminée, ajuster la quantité d'alimentation en combustible.

2. La méthode selon la revendication 1,
**caractérisée par** une quantité d'alimentation en combustible réduite étant associée à une performance réelle réduite du moteur d'actionnement électrique (24).

3. La méthode selon la revendication 2,
**caractérisée par** la quantité d'alimentation en combustible étant ajustée selon une relation directement proportionnelle à la performance réelle du moteur d'actionnement électrique (24).
